# FASCICULE DE BREVET EUROPEEN

(11) **EP 3 931 751 B1**
(45) Date de publication et mention de la délivrance du brevet: **03.04.2024**
(21) Numéro de dépôt: 20707740.5
(22) Date de dépôt: 10.02.2020
(51) Int. Cl.: G06V 10/22, G06V 10/764

(54) **PROCÉDÉ DE TRAITEMENT D'IMAGE ASSISTÉ PAR ORDINATEUR, POUR LA LECTURE D'UN MARQUAGE SUR UNE SURFACE D'UN SUPPORT EN PEAU D'ANIMAUX**
COMPUTERUNTERSTÜTZTES BILDVERARBEITUNGSVERFAHREN ZUM LESEN EINER MARKIERUNG AUF EINER OBERFLÄCHE EINER UNTERLAGE AUS TIERHAUT
METHOD FOR COMPUTER ASSISTED IMAGE PROCESSING, FOR READING A MARKING ON A SURFACE OF A SUPPORT MADE FROM ANIMAL SKIN

(30) Priorité: 28.02.2019 FR 1902067
(43) Date de publication de la demande: 05.01.2022
(73) Titulaire: CTC, 69007 Lyon (FR)
(72) Inventeur: EDMUNDS, Taiamiti, 38100 GRENOBLE (FR); LIENHARD, Olivier, 67670 WALTENHEIM SUR ZORN (FR); LAROCHE JOUBERT, Vianney, 42000 SAINT ETIENNE (FR); VIGIER, Cédric, 69250 MONTANAY (FR)
(74) Mandataire: Germain Maureau
(86) Numéro de dépôt international: PCT/FR2020/050238
(87) Numéro de publication internationale: WO 2020/174148

(56) Documents cités:
- YE QIXIANG ET AL: "Text Detection and Recognition in Imagery: A Survey", IEEE TRANSACTIONS ON PATTERN ANALYSIS AND MACHINE INTELLIGENCE, IEEE COMPUTER SOCIETY, USA, vol. 37, no. 7, 1 juillet 2015 (2015-07-01), pages 1480-1500, XP011583059, ISSN: 0162-8828, DOI: 10.1109/TPAMI.2014.2366765 [extrait le 2015-06-02]
- ZHANG ZHENG ET AL: "Multi-oriented Text Detection with Fully Convolutional Networks", 2016 IEEE CONFERENCE ON COMPUTER VISION AND PATTERN RECOGNITION (CVPR), IEEE, 27 juin 2016 (2016-06-27), pages 4159-4167, XP033021601, DOI: 10.1109/CVPR.2016.451

## Description

La présente invention concerne le domaine la reconnaissance optique de caractères pour la lecture de marquage sur des peaux d'animaux.

Il est connu de reconnaître par traitement d'image les caractères imprimés sur un support papier. Différentes techniques sont décrites par Ye Qixiang et al. dans "Text Détection and Récognition in Imagery: A Survey",IEEE TRANSACTIONS ON PATTERN ANALYSIS AND MACHINE INTELLIGENCE, IEEE COMPUTER SOCIETY, USA, vol. 37, no. 7, 1 juillet 2015 (2015-07-01), pages 1480-1500, ISSN: 0162-8828, DOI: 10.1109/TPAMI.2014.2366765.

Mais ces procédés connus de reconnaissance de caractères ne donnent pas des résultats satisfaisants sur des caractères imprimés sur d'autres supports que le papier, en particulier imprimés sur des supports en peaux d'animaux. Notamment, lorsque le marquage de la peau d'animal est réalisé avant le tannage de la peau, ce dernier abîme le marquage qui devient difficile, voire impossible, à relire ensuite avec les procédés connus de reconnaissance par traitement d'image.

L'invention a donc pour but de proposer une solution à tout ou partie de ces problèmes.

A cet effet, la présente invention concerne un procédé de traitement d'image assisté par ordinateur, pour la lecture d'un marquage sur une surface d'un support en peau d'animal, le marquage étant réalisé avant le tannage de la peau, le procédé comprenant les étapes suivantes :
- acquisition par une caméra d'une image de la surface du support;
- détection d'une zone de marquage, ladite étape de détection comprenant un premier traitement appliqué à l'intérieur d'une fenêtre, ladite fenêtre étant une partie de l'image et ladite zone de marquage étant une portion de l'image incluse dans ladite partie de l'image;
- détermination d'une orientation de la zone de marquage, ladite détermination comprenant un deuxième traitement;
- détection des caractères compris dans la zone de marquage, ladite détection comprenant un troisième traitement appliqué à une nouvelle image de la zone de marquage, la nouvelle image étant obtenue à partir de la portion de l'image correspondant à la zone de marquage par un calcul réalisé en fonction de l'orientation déterminée à l'étape précédente;
- classification de chaque caractère détecté dans la nouvelle image de la zone de marquage;
- ordonnancement des caractères détectés et classifiés dans la nouvelle image de la zone de marquage, selon un sens de lecture des caractères défini sur la base de l'orientation de la zone de marquage.

Selon un mode de mise en oeuvre, l'invention comprend une ou plusieurs des caractéristiques suivantes, seules ou en combinaison.

Selon un mode de mise en oeuvre, le procédé comprend en outre, après l'étape de détection des caractères, une étape complémentaire d'ajustement de l'orientation des lignes de caractères détectés, et une nouvelle étape de détection des caractères après l'étape complémentaire d'ajustement de l'orientation des lignes de caractères détectés.

Selon un mode de mise en oeuvre, la caméra comprend un capteur matriciel, ou un capteur linéaire.

Selon un mode de mise en oeuvre, la caméra comprend un capteur linéaire et l'au moins une image acquise à l'étape d'acquisition est une image de grande taille, de résolution élevée, par exemple une image comprenant 14000 lignes, chaque ligne comprenant 8192 pixels.

Selon un autre mode de mise en oeuvre, la caméra comprend un capteur matriciel, de taille et de résolution moins élevée qu'un capteur linéaire.

Selon un mode de mise en oeuvre, le procédé comprend une étape de définition d'au moins deux fenêtres de traitement à l'intérieur d'une partie présélectionnée de l'image, chaque fenêtre recouvrant partiellement au moins une autre fenêtre de l'au moins deux fenêtres.

Selon un mode de mise en oeuvre, le procédé comprend une étape de définition d'au moins trois fenêtres de traitement à l'intérieur d'une partie présélectionnée de l'image, chaque fenêtre recouvrant partiellement au moins une autre fenêtre de l'au moins trois fenêtres.

Selon un mode de mise en oeuvre, à l'intérieur de la partie sélectionnée de l'image, trois fenêtres de traitement sont définies, chaque fenêtre recouvrant partiellement au moins une autre fenêtre parmi les trois fenêtres. Selon un mode de mise en oeuvre, la partie présélectionnée de l'image est découpée selon trois fenêtres, chaque fenêtre ayant une taille, en nombre de colonnes de pixels, égale à la moitié du nombre de colonne de pixels de la partie présélectionnée. Ainsi, par exemple, la première fenêtre correspond à une première moitié de la partie présélectionnée ; la deuxième fenêtre correspond à une deuxième moitié de la partie présélectionnée ; et la troisième fenêtre correspond à une troisième moitié de la partie présélectionnée, située à cheval sur la première fenêtre et sur la deuxième fenêtre.

Selon un mode de mise en oeuvre, le premier traitement est appliqué à l'intérieur de chaque fenêtre de l'au moins deux fenêtres, l'étape de détection comprenant en outre un calcul d'un score de détection pour chaque zone de marquage détectée à l'intérieur de chaque fenêtre de l'au moins deux fenêtres, et une sous-étape de sélection de la zone de marquage sur la base du score de détection de la zone de marquage.

A l'intérieur de chaque fenêtre, un premier traitement de détection d'une zone de marquage et de calcul d'un score de détection est mis en oeuvre. La zone de marquage détectée avec le meilleur score de détection est, par exemple, sélectionnée pour l'étape suivante de détermination, selon un deuxième traitement, d'une orientation de la zone de marquage.

Par convention, l'orientation du marquage est définie par une direction dans le plan de la surface de la peau sur laquelle est imprimé ledit marquage, ladite direction étant transversale aux lignes de caractères qui constituent ledit marquage. L'orientation peut ainsi se définir par un angle formé entre cette direction et une direction prédéterminée sur la surface de la peau.

Sur la base de l'orientation déterminée, la portion de l'image correspondant à la zone de marquage est utilisée pour calculer une nouvelle image de la zone de marquage, par exemple par un nouvel échantillonnage de ladite portion de l'image, de manière que dans cette nouvelle image, les lignes de caractères compris dans la zone de marquage soient orientées parallèlement aux lignes de la nouvelle image calculée.

Selon un mode de mise en oeuvre, la partie de l'image courve la totalité de l'image acquise à l'étape d'acquisition.

Selon un mode de mise en oeuvre, un troisième traitement de détection des caractères est mis en oeuvre sur la nouvelle image de la zone de marquage calculée en fonction de l'orientation déterminée par le deuxième traitement.

Les caractères sont des lettres ou des chiffres.

Selon un mode de mise en oeuvre, la classification de chaque caractère détectés à l'étape de détection des caractères comprend un quatrième traitement de classification des lettres, et un cinquième traitement de classification des chiffres.

Selon un mode de mise en oeuvre, la quatrième traitement de classification des lettres est basé sur un positionnement des lettres au début de l'au moins une ligne.

Selon un mode de mise en oeuvre, le nombre de lettres positionnées sur l'au moins une ligne est prédéterminé, par exemple égal à trois.

Selon un mode de mise en oeuvre, le quatrième traitement de classification des lettres comprend l'utilisation d'un dictionnaire de codes à 3 lettres.

Selon un mode de mise en oeuvre, le cinquième traitement de classification des chiffres s'applique indépendamment à chaque caractère.

Selon un mode de mise en oeuvre, un sens de lecture est défini en fonction de l'orientation de la zone de marquage, par exemple de droite à gauche le long de l'au moins une ligne, et de haut en bas le long d'une direction définie par l'orientation de la zone de marquage.

Selon un mode de mise en oeuvre, le premier traitement de l'étape de détection de la zone de marquage comprend la mise en oeuvre d'un groupe de réseaux de neurone, le groupe comprenant un réseau de neurone du type FASTER-RCNN et un réseau de neurone du type Retinanet-Resnet50, ledit réseau de neurone de type FASTER-RCNN étant associé à un module INCEPTIONV2.

Selon un mode de mise en oeuvre, ledit réseau de neurone de type FASTER-RCNN associé au module INCEPTIONV2est entraîné au préalable au cours d'une étape d'apprentissage, par exemple déterminée par les paramètres d'apprentissage suivants :
- Résolution d'image : entre (128x128) et (1024x1024) avec un optimum pour (512x512), la résolution étant ici définie en nombre de lignes d'images x nombres de pixels d'images par ligne d'image;
- Nombre de lots ou batchs : entre 5 et 15, de préférence 10;
- Algorithme d'optimisation : type descente de gradient, de préférence descente de gradient avec inertie ;
- Nombre d'itérations de backpropagation en nombre de batchs : de 7000 à 19000, de préférence 12000 ;
- Vitesse d'apprentissage :
   ○ step 0 -> learning rate : entre 2*e⁻⁰² et 2*e⁻⁰⁶ , de préférence 2*e⁻⁰⁴
   ○ step 5000 -> learning rate : entre 2*e⁻⁰³ et 2*e⁻⁰⁷ de préférence 2*e⁻⁰⁵
   ○ step 8000 -> learning rate : entre 2*e⁻⁰⁴ et 2*e⁻⁰⁸, de preference 2*e⁻⁰⁶

Selon un mode de mise en oeuvre, le premier traitement de l'étape de détection de la zone de marquage comprend la mise en oeuvre d'un réseau de neurone de type Retinanet-Resnet50, en lieu et place d'un réseau de neurone de type Faster-RCNN-lnceptionV2.

Selon un mode de mise en oeuvre, ledit réseau de neurone de type Retinanet-Resnet50 est entraîné au préalable au cours d'une étape d'apprentissage, par exemple déterminée par les paramètres d'apprentissage suivants :
- redimensionnement des images de sorte que min_side=800 & max_side<1333 pixels ou min_side<800 & max_side=1333 pixels,
- nombre de lots ou batchs : entre 1 et 5, de préférence 3,
- algorithme d'optimisation : type descente de gradient, de préférence l'algorithme ADAM ,
- nombre d'epochs : entre 10 et 100, de préférence 50,
- vitesse d'apprentissage initiale : entre 0.000001 et 0.0001, de préférence 0.00001.

Selon un mode de mise en oeuvre, le deuxième traitement de l'étape de détermination d'une orientation de la zone de marquage comprend la mise en oeuvre d'un deuxième réseau de neurone, le deuxième réseau de neurone étant de préférence du type VGG16.

Selon un mode de mise en oeuvre, l'étape complémentaire d'ajustement de l'orientation comprend la mise en oeuvre du deuxième réseau de neurone, le deuxième réseau de neurone étant de préférence du type VGG16.

Selon un mode de mise en oeuvre, le deuxième réseau de neurone est entraîné au préalable au cours d'une étape d'apprentissage, par exemple déterminée par les paramètres d'apprentissage suivants :
- Augmentation de données : génération aléatoire d'images de sorte à avoir un grand nombre d'images dont les angles sont compris entre -90 et 90 degrés;
- Résolution d'image : entre (128x128) et (512x512), de préférence (224x224), la résolution étant ici définie en nombre de lignes d'images x nombres de pixels d'images par ligne d'image;
- Nombre d'itérations de backpropagation en nombre d'époques: entre 300 et 700, de préférence 500 ;
- Algorithme d'optimisation : type descente de gradient, de préférence l'algorithme ADAM.

Selon un mode de mise en oeuvre, le deuxième traitement de l'étape de détermination d'une orientation de la zone de marquage comprend la mise en oeuvre d'un deuxième réseau de neurone, le deuxième réseau de neurone étant de préférence du type VGG16, le deuxième réseau de neurone étant entraîné au préalable au cours d'une étape d'apprentissage, par exemple déterminée par les paramètres d'apprentissage suivants :
- Résolution d'image : entre (128x128) et (512x512) de préférence (224x224),
- algorithme d'optimisation : type descente de gradient, de préférence l'algorithme ADAM,
- vitesse d'apprentissage initiale : entre 0.00001 et 0.0001, de préférence 0.00005,
   - - nombre d'epochs : entre 300 et 700, de préférence 500

Selon un mode de mise en oeuvre, le troisième traitement de l'étape de détection des caractères compris dans la zone de marquage comprend la mise en oeuvre d'un groupe de réseaux de neurone, le groupe comprenant un réseau de neurone du type FASTER-RCNN et un réseau de neurone du type Retinanet-Resnet50, ledit réseau de neurone de type FASTER-RCNN étant associé à un module INCEPTIONV2.

Selon un mode de mise en oeuvre, la nouvelle étape de détection des caractères comprend la mise en oeuvre du troisième réseau de neurone, le troisième réseau de neurone étant de préférence un groupe de réseaux de neurone, le groupe comprenant un réseau de neurone du type FASTER-RCNN et un réseau de neurone du type Retinanet-Resnet50, ledit réseau de neurone de type FASTER-RCNN étant associé à un module INCEPTIONV2.

Selon un mode de mise en oeuvre, ledit réseau de neurone de type FASTER-RCNN associé au module INCEPTIONV2 estentraîné au préalable au cours d'une étape d'apprentissage, par exemple déterminée par les paramètres d'apprentissage suivants :
- Résolution d'image : entre (128x128) et (1024x1024), de préférence (340x450), la résolution étant ici définie en nombre de lignes d'images x nombres de pixels d'images par ligne d'image;
- Nombre de lots ou batchs: entre 5 et 15, de préférence 10 ;
- Algorithme d'optimisation: type descente de gradient, de préférence descente de gradient avec inertie ;
- Nombre d'itérations de backpropagation en nombre de batchs: de 7000 à 19000, de préférence 12000 ;
- Vitesse d'apprentissage :
   ○ step 0 -> learning rate : entre 2*e⁻⁰² et 2*e⁻⁰⁶, de préférence 2*e⁻⁰⁴
   ○ step 5000 -> learning rate : entre 2*e⁻⁰³ et 2*e⁻⁰⁷ , de préférence 2*e⁻⁰⁵
   ○ step 8000 -> learning rate : entre 2*e⁻⁰⁴ et 2*e-⁰⁸, de préférence 2*e⁻⁰⁶

Selon un mode de mise en oeuvre, le troisième traitement de l'étape de détection de la zone de marquage comprend la mise en oeuvre d'un réseau de neurone de type Retinanet-Resnet50, en lieu et place d'un réseau de neurone de type Faster-RCNN-lnceptionV2.

Selon un mode de mise en oeuvre, ledit réseau de neurone de type Retinanet-Resnet50 est entraîné au préalable au cours d'une étape d'apprentissage, par exemple déterminée par les paramètres d'apprentissage suivants :
- redimensionnement des images de sorte que min_side=800 & max_side<1333 pixels ou min_side<800 & max_side=1333 pixels,
- nombre de lots ou batchs : entre 1 et 5, de préférence 3,
- algorithme d'optimisation : type descente de gradient, de préférence l'algorithme ADAM ,
- nombre d'epochs : entre 10 et 100 , de préférence 50,
- vitesse d'apprentissage initiale : entre 0.000001 et 0.0001, de préférence 0.00001.

Selon un mode de mise en oeuvre, le quatrième traitement de classification des lettres comprend la mise en oeuvre d'un quatrième réseau de neurone, le quatrième réseau de neurone étant de préférence du type LeNet.

Selon un mode de mise en oeuvre, le cinquième traitement de classification des chiffres comprend la mise en oeuvre d'un cinquième réseau de neurone, le cinquième réseau de neurone étant de préférence du type LeNet.

Pour sa bonne compréhension, un mode de mise en oeuvre de l'invention est décrit en référence au dessin ci-annexé représentant, à titre d'exemple non limitatif, une forme de mise en oeuvre respectivement d'un procédé selon l'invention. Les mêmes références sur les dessins désignent des éléments similaires ou des éléments dont les fonctions sont similaires.

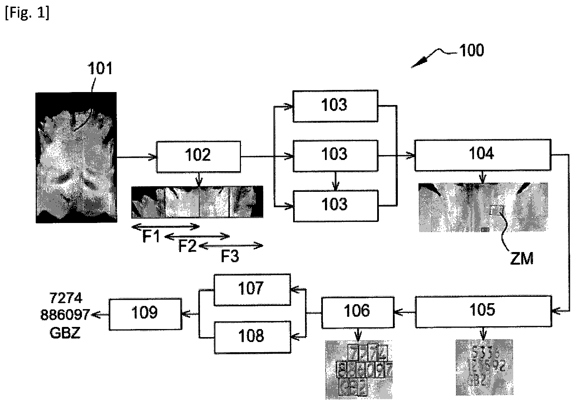

[Fig. 1] est une représentation des étapes du procédé de traitement d'image

Sur la figure 1, les différentes étapes du procédé 100 de traitement d'image selon l'invention sont présentées, en commençant par l'étape 101 d'acquisition d'une image par une caméra. Différents mode d'acquisition de l'image sont possibles ; par exemple, l'image peut être acquise par une caméra équipée d'un capteur matriciel, i.e. dont les détecteurs élémentaires forme une matrice de détecteurs, de sorte que directement, une image numérique est obtenue de la scène observée par l'objectif de la caméra, sans balayage par le capteur de la scène observée; selon un autre mode de mise en oeuvre, l'image peut être acquise par une caméra équipée d'un capteur linéaire, i.e. dont les détecteurs élémentaires sont alignés et forment sensiblement une seule ligne, ledit capteur linéaire étant configuré pour balayer la scène observée de façon à obtenir une image complète de la scène observée à la fin du balayage. L'homme du métier comprendra que différents moyens sont envisageables pour acquérir une image numérique de la scène observée, et que la résolution de l'image acquise est fonction du moyen d'acquisition utilisé ; ainsi, selon un mode de mise en oeuvre, l'acquisition de l'image avec une caméra à balayage avec un capteur linéaire permet d'obtenir une image comprenant 14000 lignes, chaque ligne comprenant 8192 pixels. Selon un autre mode de mise en oeuvre, avec une caméra avec un capteur matriciel, une image numérique de taille et de résolution moindres est obtenue.

La scène observée considérée ici est une peau d'animal, ladite peau ayant été marquée au laser à des fins d'identification. Le marquage comprend en général une série de lignes, par exemple trois lignes successives, chaque ligne comprenant une série de caractères, les caractères pouvant être des chiffres ou des lettres. Les conditions de réalisation du marquage sont telles que, la peau de l'animal étant posée ou suspendue selon une orientation prédéterminée dans un plan respectivement horizontal ou vertical, de façon à présenter une surface sensiblement plane contenue dans ledit plan, la position du marquage sur cette surface plane peut être déterminée a priori à l'intérieur d'une portion prédéterminée de la surface. Ainsi, par exemple, avec les images acquises selon un mode de mise en oeuvre du procédé avec une caméra équipée d'un capteur linéaire balayant la scène, les images acquises ont une taille de 14000 lignes, chaque ligne comprenant 8192 pixels ; sur ces images seule la partie haute, soit environ 40 cm en hauteur, est utile, car la zone de marquage est nécessairement localisée dans cette partie de l'image. Cette connaissance approximative de la position du marquage sur la surface de la peau est une source d'optimisation du temps de traitement et des ressources de stockage des données numériques sur lesquelles le procédé de traitement est appliqué ; en effet, cette connaissance approximative de la position de la zone de marquage dans l'image acquise avec la caméra permet de prédéterminer une partie de l'image, sur la base d'une dimension de l'au moins une image, afin de réduire la taille de la zone de traitement de l'au moins une image, par exemple en ne retenant pour la partie prédéterminée que les premières lignes, ou que les lignes comprises entre n_{ème} et la (n+l)_{ème} ligne ; par exemple, dans le cas d'un capteur linéaire produisant une image de 14000 lignes, la partie présélectionnée comprendra les lignes d'images comprises entre la 2000^{ème} ligne et la 4000^{ème} ligne; la dimension de la partie sélectionnée est déterminée de façon à s'assurer que la partie sélectionnée comprend la zone de marquage considérée. Selon un mode de mise en oeuvre seule la partie prédéterminée est stockée dans une base de données des images acquises, de façon à réduire les besoins en capacité de stockage.

D'autre part l'orientation du marquage relativement à une orientation prédéterminée de la surface de la peau sur laquelle le marquage est imprimé, est variable, de même que la qualité du marquage des différents caractères du marquage.

Selon un mode de mise en oeuvre, l'angle de rotation entre un axe définissant une orientation du marquage et un axe définissant une orientation prédéterminée de la surface de la peau sur laquelle le marquage est imprimé, est variable et compris entre -90 degrés et + 90 degrés.

Après l'étape 101 d'acquisition de l'image de la surface de la peau marquée, une étape de détection 103 d'une zone de marquage ZM, est mise en oeuvre sur l'image acquise, ou sur une partie prédéterminée, comme indiqué ci-avant, de l'image acquise; ladite étape de détection 103 comprend un premier traitement appliqué à l'intérieur d'une fenêtre, ladite fenêtre étant une partie de l'image et ladite zone de marquage ZM à détecter formant une portion de l'image incluse dans ladite partie de l'image. Selon un mode de mise en oeuvre, le premier traitement de détection 103 de la zone de marquage ZM est appliqué à l'intérieur d'une fenêtre à l'intérieur de laquelle la zone de marquage est présumée se trouver. Ladite fenêtre peut ainsi correspondre à la partie prédéterminée de l'image à l'intérieur de laquelle la zone de marquage est présumée se trouver compte tenu des conditions de mise en oeuvre du marquage au laser sur la peau de l'animal. En limitant la taille de la fenêtre à la taille de la partie prédéterminée de l'image, le temps de traitement est réduit.

Selon un autre mode de mise en oeuvre, plusieurs fenêtres, typiquement au moins 2, voire 3 fenêtres ou plus, peuvent être définies à l'intérieur de la partie prédéterminée de l'image, de manière à ce que chaque fenêtre recouvre partiellement au moins une autre fenêtre de l'au moins deux, voire trois fenêtres. Comme cela est illustré sur la figure 1, selon un mode de mise en oeuvre, le procédé comprend une étape de définition 102 d'au moins trois fenêtres de traitement F1, F2, F3 à l'intérieur de la partie prédéterminée de l'image, chaque fenêtre recouvrant partiellement au moins une autre fenêtre de l'au moins trois fenêtres. Par exemple, la partie prédéterminée de l'image est découpée selon trois fenêtres, chaque fenêtre F1, F2, F3 ayant une taille, en nombre de colonnes de pixels, égale à la moitié du nombre de colonne de pixels de la partie présélectionnée. Ainsi, par exemple, la première fenêtre F1 correspond à une première moitié de la partie présélectionnée ; la deuxième fenêtre F3 correspond à une deuxième moitié de la partie présélectionnée ; et la troisième fenêtre F2 correspond à une troisième moitié de la partie présélectionnée, située à cheval sur la première fenêtre F1 et sur la deuxième fenêtre F3.

Ainsi, à l'intérieur d'une ou plusieurs fenêtres, un premier traitement de détection 103 d'une zone de marquage est mis en oeuvre. Lorsque ledit premier traitement de détection 103 est appliqué à l'intérieur de plusieurs fenêtres, il est alors appliqué à l'intérieur de chaque fenêtre, et l'étape de détection 103 comprend en outre le calcul d'un score de détection pour chaque zone de marquage ZM détectée à l'intérieur de chaque fenêtre, et une sous-étape de sélection 104 de la zone de marquage ZM sur la base du score de détection de la zone de marquage. Ainsi, par exemple, l'étape de détection 103 de la zone de marquage ZM sélectionnera la zone de marquage ZM qui a été détecté dans une des fenêtres avec un meilleur score de détection que les autres zones de marquages ZM détectées dans chacune des autres fenêtres.

Selon un mode de mise en oeuvre, l'étape de détection 103 de la zone de marquage est réalisée directement sur l'image acquise à l'étape 101, à l'intérieur d'une seule fenêtre couvrant la totalité de l'image accquise.

Une zone de marquage ZM ayant été détectée dans l'image, à l'issue l'étape de détection 103 d'une zone de marquage, une étape de détermination 105 d'une orientation de la zone de marquage ZM, ladite détermination comprenant un deuxième traitement. Comme cela a été indiqué ci-avant les conditions mise en oeuvre du marquage au laser sont telles que l'orientation du marquage est variable.

Par convention, l'orientation du marquage est définie par une direction dans le plan de la surface de la peau sur laquelle est imprimé ledit marquage, ladite direction étant transversale aux lignes de caractères qui constituent ledit marquage. L'orientation peut ainsi se définir par un angle formé entre cette direction et une direction prédéterminée sur la surface de la peau.

Après avoir déterminé l'orientation du marquage, une nouvelle image de la zone de marquage ZM, la nouvelle image étant obtenue à partir de la portion de l'image correspondant à la zone de marquage ZM, telle que détectée par l'étape de détection 103 de la zone de marquage ; pour obtenir ladit nouvelle image, un calcul est réalisé en fonction de l'orientation déterminée à l'étape précédente pour obtenir une nouvelle image rééchantillonée de sorte que les lignes de pixels de la nouvelle image soient sensiblement transversales à la direction définissant l'orientation de la zone de marquage.

Un troisième traitement de détection 106 des caractères compris dans la zone de marquage ZM est alors mis en oeuvre sur la nouvelle image de la zone de marquage ZM. A l'issue de cette étape de détection 106 des caractères compris dans la zone de marquage, différentes fenêtres sont identifiées dans la nouvelle image de la zone de marquage, qui ont chacune approximativement la taille d'un des caractères imprimés dans la zone de marquage, et qui contiennent chacune un des caractères de la zone de marquage. Ainsi, les caractères sont détectés mais ne sont pas encore reconnus.

Les caractères désignent des lettres ou des chiffres.

La reconnaissance des caractères détectés est le résultat d'une étape suivante de classification 107, 108 des caractères détectés. Cette étape comprend comprend un quatrième traitement 107 de classification des lettres, et un cinquième traitement 108 de classification des chiffres. Le quatrième et le cinquième traitement 107, 108 s'appliquent à chacune des fenêtres identifiées à l'intérieur de la nouvelle image de la zone de marquage ZM par le troisième traitement de détection 106 des caractères.

Selon un mode de mise en oeuvre, la quatrième traitement 107 de classification des lettres est basé sur un positionnement des lettres au début de l'au moins une ligne. Par exemple, s'il est connu a priori que les caractères de type lettre ne figureront dans le marquage qu'au début de la dernière ligne du marquage, alors cette connaissance a prirori est prise en compte dans le quatrième traitement. Selon un mode de mise en oeuvre, le nombre de lettres positionnées sur la dernière ligne peut également être connu a priori, et un dictionnaire de codes définissant la liste des différentes combinaisons possibles de lettres peut également faire partie des connaissances a priori. Ainsi, selon un mode de mise en oeuvre, le quatrième traitement 107 de classification des lettres comprend l'utilisation d'un dictionnaire de codes à 3 lettres.

Le cinquième traitement 108 de classification des chiffres s'applique indépendamment à chaque caractère, à l'intérieur de chacune des fenêtres identifiées à l'intérieur de la nouvelle image de la zone de marquage ZM par le troisième traitement de détection 106 des caractères.

Une fois que les différents chiffres et lettres ont été reconnus par le quatrième traitement et le cinquième traitement, un sens de lecture est défini en fonction de l'orientation de la zone de marquage, par exemple de droite à gauche le long de l'au moins une ligne, et de haut en bas le long d'une direction définie par l'orientation de la zone de marquage. Sur la base de ce sens de lecture, et du positionnement respectif des différents chiffres et lettres, un ordonnancement des chiffres et des lettres est défini.

Selon un mode de mise en oeuvre, des détections aberrantes de caractères sont écartées lorsqu'elles n'appartiennent à aucune ligne de la zone de marquage.

Ainsi comme cela est illustré sur la figure 1, et selon un mode de mise en oeuvre, le procédé de traitement d'image selon l'invention comprend cinq traitement :
- un premier traitement de l'étape de détection 103 de la zone de marquage ;
- un deuxième traitement de l'étape de détermination 105 d'une orientation de la zone de marquage ZM ;
- un troisième traitement de l'étape de détection 106 des caractères compris dans la zone de marquage ZM ;
- un quatrième traitement 107 de classification des lettres détectées dans la zone de marquage ZM ;
- un cinquième traitement 108 de classification des chiffres détectés dans la zone de marquage ZM

Selon un mode de mise en oeuvre, le premier traitement de l'étape de détection 103 de la zone de marquage comprend la mise en oeuvre d'un premier réseau de neurone, le premier réseau de neurone étant de préférence du type FASTER-RCNN et comprenant un module INCEPTIONV2.

Selon un mode de mise en oeuvre, le premier traitement de l'étape de détection 103 de la zone de marquage comprend la mise en oeuvre d'un premier réseau de neurone du type FASTER-RCNN et comprenant un module INCEPTIONV2, le premier réseau de neurone étant entraîné au préalable au cours d'une étape d'apprentissage, par exemple déterminée par les paramètres d'apprentissage suivants :
- Résolution d'image : entre (128x128) et (1024x1024) avec un optimum pour (512x512), la résolution étant ici définie en nombre de lignes d'images x nombres de pixels d'images par ligne d'image;
- Nombre de lots ou batchs : entre 5 et 15, de préférence 10;
- Algorithme d'optimisation : type descente de gradient, de préférence descente de gradient avec inertie ;
- Nombre d'itérations de backpropagation en nombre de batchs : de 7000 à 19000, de préférence 12000 ;
- Vitesse d'apprentissage :
   ○ step 0 -> learning rate : entre 2*e⁻⁰² et 2*e⁻⁰⁶ , de préférence 2*e⁻⁰⁴
   ○ step 5000 -> learning rate : entre 2*e⁻⁰³ et 2*e⁻⁰⁷ de préférence 2*e⁻⁰⁵
   ○ step 8000 -> learning rate : entre 2*e⁻⁰⁴ et 2*e⁻⁰⁸, de preference 2*e⁻⁰⁶

Selon un mode de mise en oeuvre, le premier traitement de l'étape de détection de la zone de marquage comprend la mise en oeuvre d'un réseau de neurone de type Retinanet-Resnet50, en lieu et place d'un réseau de neurone de type Faster-RCNN-InceptionV2.

Selon un mode de mise en oeuvre, ledit réseau de neurone de type Retinanet-Resnet50 est entraîné au préalable au cours d'une étape d'apprentissage, par exemple déterminée par les paramètres d'apprentissage suivants :
- redimensionnement des images de sorte que min_side=800 & max_side<1333 pixels ou min_side<800 & max_side=1333 pixels,
- nombre de lots ou batchs : entre 1 et 5 avec un optimum à 3,
- algorithme d'optimisation : type descente de gradient, de préférence l'algorithme ADAM ,
- nombre d'epochs : entre 10 et 100, de préférence 50,
- vitesse d'apprentissage initiale : entre 0.000001 et 0.0001, de préférence 0.00001.

Selon un mode de mise en oeuvre, le deuxième traitement de l'étape de détermination 105 d'une orientation de la zone de marquage ZM comprend la mise en oeuvre d'un deuxième réseau de neurone, le deuxième réseau de neurone étant de préférence du type VGG16.

Selon un mode de mise en oeuvre, le deuxième traitement de l'étape de détermination 105 d'une orientation de la zone de marquage ZM comprend la mise en oeuvre d'un deuxième réseau de neurone, le deuxième réseau de neurone étant de préférence du type VGG16, le deuxième réseau de neurone étant entraîné au préalable au cours d'une étape d'apprentissage, par exemple déterminée par les paramètres d'apprentissage suivants :
- Augmentation de données : génération aléatoire d'images de sorte à avoir un grand nombre d'images dont les angles sont compris entre -90 et 90 degrés;
- Résolution d'image : entre (128x128) et (512x512), de préférence (224x224), la résolution étant ici définie en nombre de lignes d'images x nombres de pixels d'images par ligne d'image;
- Nombre d'itérations de backpropagation en nombre d'époques: entre 300 et 700, de préférence 500 ;
- Algorithme d'optimisation : type descente de gradient, de préférence l'algorithme ADAM.

Selon un mode de mise en oeuvre, le deuxième traitement de l'étape de détermination 105 d'une orientation de la zone de marquage ZM comprend la mise en oeuvre d'un réseau de neurone du type VGG16, ledit réseau de neurone étant entraîné au préalable au cours d'une étape d'apprentissage, avantageusement déterminée par les paramètres d'apprentissage suivants :
- Résolution d'image : entre (128x128) et (512x512) de préférence (224x224),
- algorithme d'optimisation : type descente de gradient, de préférence l'algorithme ADAM,
- vitesse d'apprentissage initiale : entre 0.00001 et 0.0001, de préférence 0.00005,
- nombre d'epochs : entre 300 et 700, de préférence 500

Selon un mode de mise en oeuvre, le troisième traitement de l'étape de détection 106 des caractères compris dans la zone de marquage ZM comprend la mise en oeuvre d'un troisième réseau de neurone, le troisième réseau de neurone étant de préférence du type FASTER-RCNN et comprenant un module INCEPTIONV2.

Selon un mode de mise en oeuvre, le troisième traitement de l'étape de détection 106 des caractères compris dans la zone de marquage ZM comprend la mise en oeuvre d'un troisième réseau de neurone du type FASTER-RCNN et comprenant un module INCEPTIONV2, le troisième réseau de neurone étant entraîné au préalable au cours d'une étape d'apprentissage, par exemple déterminée par les paramètres d'apprentissage suivants :
- Résolution d'image : entre (128x128) et (1024x1024), de préférence (340x450), la résolution étant ici définie en nombre de lignes d'images x nombres de pixels d'images par ligne d'image;
- Nombre de lots ou batchs: entre 5 et 15, de préférence 10 ;
- Algorithme d'optimisation: type descente de gradient, de préférence descente de gradient avec inertie ;
- Nombre d'itérations de backpropagation en nombre de batchs: de 7000 à 19000, de préférence 12000 ;
- Vitesse d'apprentissage :
   ○ step 0 -> learning rate : entre 2*e⁻⁰² et 2*e⁻⁰⁶, de préférence 2*e⁻⁰⁴
   ○ step 5000 -> learning rate : entre 2*e⁻⁰³ et 2*e⁻⁰⁷ , de préférence 2*e⁻⁰⁵
   ○ step 8000 -> learning rate : entre 2*e⁻⁰⁴ et 2*e⁻⁰⁸, de préférence 2*e⁻⁰⁶

Selon un mode de mise en oeuvre, le troisième traitement de l'étape de détection 106 des caractères compris dans la zone de marquage ZM comprend la mise en oeuvre d'un réseau de neurone de type Retinanet-Resnet50, en lieu et place d'un réseau de neurone de type Faster-RCNN-lnceptionV2.

Selon un mode de mise en oeuvre, le troisième traitement de l'étape de détection 106 des caractères compris dans la zone de marquage ZM comprend la mise en oeuvre d'un réseau de neurone de type Retinanet-Resnet50, ledit réseau de neurone étant entraîné au préalable au cours d'une étape d'apprentissage, par exemple déterminée par les paramètres d'apprentissage suivants :
- redimensionnement des images de sorte que min_side=800 & max_side<1333 pixels ou min_side<800 & max_side=1333 pixels,
- nombre de lots ou batchs : entre 1 et 5, de préférence 3,
- algorithme d'optimisation : type descente de gradient, de préférence l'algorithme ADAM ,
- nombre d'epochs : entre 10 et 100 , de préférence 50,
- vitesse d'apprentissage initiale : entre 0.000001 et 0.0001, de préférence 0.00001.

Selon un mode de mise en oeuvre, le quatrième traitement 107 de classification des lettres comprend la mise en oeuvre d'un quatrième réseau de neurone, le quatrième réseau de neurone étant de préférence du type LeNet.

Selon un mode de mise en oeuvre, le cinquième traitement 108 de classification des chiffres comprend la mise en oeuvre d'un cinquième réseau de neurone, le cinquième réseau de neurone étant de préférence du type LeNet.

Selon un mode mise en oeuvre, le cinquième réseau de neurone du type LeNet est entraîné au cours d'une étape d'apprentissage sur des portions d'images, comprenant, par exemple, 28 lignes, et 28 pixels d'image par ligne.

Selon un mode de mise en oeuvre, le procédé 100 comprend une étape complémentaire d'ajustement de l'orientation des lignes de caractères détectés, après l'étape de détection 106 des caractères, et avant une nouvelle étape de détection des caractères. L'étape complémentaire d'ajustement de l'orientation des lignes de caractères détectés comprend par exemple un traitement de type réseau de neurone du même type que le deuxième traitement pour la détermination de l'orientation de la zone de marquage. La nouvelle étape de détection des caractères, réalisée après l'étape complémentaire d'ajustement de l'orientation, comprend par exemple un traitement du type réseau de neurone du même type que le troisième traitement pour la première étape de détection de caractères, avant l'étape complémentaire d'ajustement de l'orientation.

## Revendications

1. Procédé (100) de traitement d'image assisté par ordinateur, pour la lecture d'un marquage sur une surface d'un support en peau d'animal, le marquage étant réalisé avant le tannage de la peau, le procédé comprenant les étapes suivantes :
- acquisition (101) par une caméra d'une image de la surface du support;
- détection (103) d'une zone de marquage (ZM), ladite étape de détection comprenant un premier traitement appliqué à l'intérieur d'une fenêtre, ladite fenêtre étant une partie de l'image et ladite zone de marquage étant une portion de l'image incluse dans ladite partie de l'image;
- détermination (105) d'une orientation de la zone de marquage (ZM), ladite détermination comprenant un deuxième traitement;
- détection (106) des caractères compris dans la zone de marquage (ZM), ladite détection comprenant un troisième traitement appliqué à une nouvelle image de la zone de marquage (ZM), la nouvelle image étant obtenue à partir de la portion de l'image correspondant à la zone de marquage (ZM) par un calcul réalisé en fonction de l'orientation déterminée à l'étape précédente;
- classification (107, 108) de chaque caractère détecté dans la nouvelle image de la zone de marquage (ZM) ;
- ordonnancement (109) des caractères détectés et classifiés dans la nouvelle image de la zone de marquage (ZM), selon un sens de lecture des caractères défini sur la base de l'orientation de la zone de marquage.

2. Procédé (100) selon la revendication 1, comprenant en outre, après l'étape de détection (106) des caractères, une étape complémentaire d'ajustement de l'orientation des lignes de caractères détectés, et une nouvelle étape de détection des caractères après l'étape complémentaire d'ajustement de l'orientation des lignes de caractères détectés.

3. Procédé (100) selon l'une des revendications 1 ou 2, dans lequel la caméra comprend un capteur matriciel, ou un capteur linéaire.

4. Procédé (100) selon l'une des revendications 1 à 3, comprenant une étape de définition (102) d'au moins deux fenêtres de traitement (F1, F2) à l'intérieur d'une partie présélectionnée de l'image, chaque fenêtre recouvrant partiellement au moins une autre fenêtre de l'au moins deux fenêtres.

5. Procédé (100) selon la revendication 4, dans lequel le premier traitement est appliqué à l'intérieur de chaque fenêtre de l'au moins deux fenêtres, l'étape de détection (103) comprenant en outre un calcul d'un score de détection pour chaque zone de marquage (ZM) détectée à l'intérieur de chaque fenêtre de l'au moins deux fenêtres, et une sous-étape de sélection (104) de la zone de marquage (ZM) sur la base du score de détection de la zone de marquage.

6. Procédé (100) selon l'une des revendications 1 à 3, dans lequel la partie de l'image courve la totalité de l'image acquise à l'étape d'acquisition.

7. Procédé selon l'une des revendications précédentes, dans lequel la classification (107, 108) de chaque caractère détectés à l'étape de détection (106) des caractères comprend un quatrième traitement (107) de classification des lettres, et un cinquième traitement (108) de classification des chiffres.

8. Procédé (100) selon l'une des revendications précédentes, dans lequel le premier traitement de l'étape de détection (103) de la zone de marquage comprend la mise en oeuvre d'un premier réseau de neurone, le premier réseau de neurone étant de préférence un groupe de réseaux de neurone, le groupe comprenant un réseau de neurone du type FASTER-RCNN et un réseau de neurone du type Retinanet-Resnet50, ledit réseau de neurone de type FASTER-RCNN étant associé à un module INCEPTIONV2.

9. Procédé (100) selon l'une des revendications précédentes, dans lequel le deuxième traitement de l'étape de détermination (105) d'une orientation de la zone de marquage (ZM) comprend la mise en oeuvre d'un deuxième réseau de neurone, le deuxième réseau de neurone étant de préférence du type VGG16.

10. Procédé (100) selon la revendication 9, en tant qu'elle dépend de la revendication 2, dans lequel l'étape complémentaire d'ajustement de l'orientation comprend la mise en oeuvre du deuxième réseau de neurone, le deuxième réseau de neurone étant de préférence du type VGG16.

11. Procédé (100) selon l'une des revendications précédentes, dans lequel le troisième traitement de l'étape de détection (106) des caractères compris dans la zone de marquage (ZM) comprend la mise en oeuvre d'un troisième réseau de neurone, le troisième réseau de neurone étant de préférence un groupe de réseaux de neurone, le groupe comprenant un réseau de neurone du type FASTER-RCNN et un réseau de neurone du type Retinanet-Resnet50, ledit réseau de neurone de type FASTER-RCNN étant associé à un module INCEPTIONV2.

12. Procédé (100) selon la revendication 11, en tant qu'elle dépend de la revendication 2, dans lequel la nouvelle étape de détection des caractères comprend la mise en oeuvre du troisième réseau de neurone, le troisième réseau de neurone étant de préférence un groupe de réseaux de neurone, le groupe comprenant un réseau de neurone du type FASTER-RCNN et un réseau de neurone du type Retinanet-Resnet50, ledit réseau de neurone de type FASTER-RCNN étant associé à un module INCEPTIONV2.

13. Procédé (100) selon la revendication 7 ou selon l'une des revendications 8 à 12, en tant qu'elle dépend de la revendication 7, dans lequel le quatrième traitement (107) de classification des lettres comprend la mise en oeuvre d'un quatrième réseau de neurone, le quatrième réseau de neurone étant de préférence du type LeNet.

14. Procédé (100) selon la revendication 7 ou selon l'une des revendications 8 à 13, en tant qu'elle dépend de la rendication 7, dans lequel le cinquième traitement (108) de classification des chiffres comprend la mise en oeuvre d'un cinquième réseau de neurone, le cinquième réseau de neurone étant de préférence du type LeNet.

## Patentansprüche

1. Computerunterstütztes Bildverarbeitungsverfahren (100) zum Lesen einer Markierung auf einer Oberfläche einer Unterlage aus Tierhaut, wobei die Markierung vor dem Gerben der Haut ausgeführt wird, wobei das Verfahren die folgenden Schritte umfasst:
- Erfassen (101) eines Bildes der Oberfläche der Unterlage durch eine Kamera;
- Erkennen (103) eines Markierungsbereichs (ZM), wobei der Schritt des Erkennens eine erste Verarbeitung umfasst, die innerhalb eines Fensters angewendet wird, wobei das Fenster ein Teil des Bildes ist und der Markierungsbereich ein Abschnitt des Bildes ist, der in dem Teil des Bildes beinhaltet ist;
- Bestimmen (105) einer Ausrichtung des Markierungsbereichs (ZM), wobei das Bestimmen eine zweite Verarbeitung umfasst;
- Erkennen (106) der Zeichen, die in dem Markierungsbereich (ZM) umfasst sind, wobei das Erkennen eine dritte Verarbeitung umfasst, die auf ein neues Bild des Markierungsbereichs (ZM) angewendet wird, wobei das neue Bild auf Grundlage des Abschnitts des Bildes, der dem Markierungsbereich (ZM) entspricht, durch eine Berechnung erhalten wird, die in Abhängigkeit von der im vorhergehenden Schritt bestimmten Ausrichtung durchgeführt wird;
- Klassifizieren (107, 108) jedes Zeichens, das in dem neuen Bild des Markierungsbereichs (ZM) erkannt wird;
- Ordnen (109) der in dem neuen Bild des Markierungsbereichs (ZM) erkannten und klassifizierten Zeichen gemäß einer Leserichtung der Zeichen, die auf Basis der Ausrichtung des Markierungsbereichs definiert wird.

2. Verfahren (100) nach Anspruch 1, das nach dem Schritt des Erkennens (106) der Zeichen weiter einen komplementären Schritt des Anpassens der Ausrichtung der Zeilen von erkannten Zeichen, und einen neuen Schritt des Erkennens der Zeichen nach dem komplementären Schritt des Anpassens der Ausrichtung der Zeilen von erkannten Zeichen umfasst.

3. Verfahren (100) nach einem der Ansprüche 1 oder 2, wobei die Kamera einen Matrixsensor oder einen linearen Sensor umfasst.

4. Verfahren (100) nach einem der Ansprüche 1 bis 3, das einen Schritt des Definierens (102) von mindestens zwei Verarbeitungsfenstern (F1, F2) innerhalb eines vorausgewählten Teils des Bildes umfasst, wobei jedes Fenster ein anderes Fenster der mindestens zwei Fenster mindestens teilweise überdeckt.

5. Verfahren (100) nach Anspruch 4, wobei die erste Verarbeitung innerhalb jedes Fensters der mindestens zwei Fenster angewendet wird, wobei der Schritt des Erkennens (103) weiter eine Berechnung eines Erkennungspunktwerts für jeden Markierungsbereich (ZM), der innerhalb jedes Fensters der mindestens zwei Fenster erkannt wird, und einen Teilschritt des Auswählens (104) des Markierungsbereichs (ZM) auf Basis des Erkennungspunktwerts des Markierungsbereichs umfasst.

6. Verfahren (100) nach einem der Ansprüche 1 bis 3, wobei der Teil des Bildes die Gesamtheit des im Schritt des Erfassens erfassten Bildes abdeckt.

7. Verfahren nach einem der vorstehenden Ansprüche, wobei das Klassifizieren (107, 108) jedes im Schritt des Erkennens (106) der Zeichen erkannten Zeichens eine vierte Verarbeitung (107) zum Klassifizieren der Buchstaben und eine fünfte Verarbeitung (108) zum Klassifizieren der Ziffern umfasst.

8. Verfahren (100) nach einem der vorstehenden Ansprüche, wobei die erste Verarbeitung aus dem Schritt des Erkennens (103) des Markierungsbereichs den Einsatz eines ersten neuronalen Netzwerks umfasst, wobei das erste neuronale Netzwerk bevorzugt eine Gruppe von neuronalen Netzwerken ist, wobei die Gruppe ein neuronales Netzwerk vom Typ FASTER-RCNN und ein neuronales Netzwerk vom Typ Retinanet-Resnet50 umfasst, wobei das neuronale Netzwerk vom Typ FASTER-RCNN mit einem INCEPTIONV2-Modul verknüpft ist.

9. Verfahren (100) nach einem der vorstehenden Ansprüche, wobei die zweite Verarbeitung aus dem Schritt des Bestimmens (105) einer Ausrichtung des Markierungsbereichs (ZM) den Einsatz eines zweiten neuronalen Netzwerks umfasst, wobei das zweite neuronale Netzwerk bevorzugt vom Typ VGG16 ist.

10. Verfahren (100) nach Anspruch 9 in Abhängigkeit von Anspruch 2, wobei der komplementäre Schritt des Anpassens der Ausrichtung den Einsatz des zweiten neuronalen Netzwerks umfasst, wobei das zweite neuronale Netzwerk bevorzugt vom Typ VGG16 ist.

11. Verfahren (100) nach einem der vorstehenden Ansprüche, wobei die dritte Verarbeitung aus dem Schritt des Erkennens (106) der im Markierungsbereich (ZM) umfassten Zeichen den Einsatz eines dritten neuronalen Netzwerks umfasst, wobei das dritte neuronale Netzwerk bevorzugt eine Gruppe von neuronalen Netzwerken ist, wobei die Gruppe ein neuronales Netzwerk vom Typ FASTER-RCNN und ein neuronales Netzwerk vom Typ Retinanet-Resnet50 umfasst, wobei das neuronale Netzwerk vom Typ FASTER-RCNN mit einem INCEPTIONV2-Modul verknüpft ist.

12. Verfahren (100) nach Anspruch 11 in Abhängigkeit von Anspruch 2, wobei der neue Schritt des Erkennens der Zeichen den Einsatz des dritten neuronalen Netzwerks umfasst, wobei das dritte neuronale Netzwerk bevorzugt eine Gruppe von neuronalen Netzwerken ist, wobei die Gruppe ein neuronales Netzwerk vom Typ FASTER-RCNN und ein neuronales Netzwerk vom Typ Retinanet-Resnet50 umfasst, wobei das neuronale Netzwerk vom Typ FASTER-RCNN mit einem INCEPTIONV2-Modul verknüpft ist.

13. Verfahren (100) nach Anspruch 7 oder nach einem der Ansprüche 8 bis 12 in Abhängigkeit von Anspruch 7, wobei die vierte Verarbeitung (107) zum Klassifizieren der Buchstaben den Einsatz eines vierten neuronalen Netzwerks umfasst, wobei das vierte neuronale Netzwerk bevorzugt vom Typ LeNet ist.

14. Verfahren (100) nach Anspruch 7 oder nach einem der Ansprüche 8 bis 13 in Abhängigkeit von Anspruch 7, wobei die fünfte Verarbeitung (108) zum Klassifizieren der Ziffern den Einsatz eines fünften neuronalen Netzwerks umfasst, wobei das fünfte neuronale Netzwerk bevorzugt vom Typ LeNet ist.

## Claims

1. A computer-aided image processing method (100) for reading a marking on a surface of an animal skin support, the method being carried out before tanning the skin, the method comprising the steps of:
- acquiring (101) by a camera an image of the surface of the support;
- detecting (103) a marking area (ZM), said detection step comprising a first processing applied within a window, said window being a part of the image and said marking area being a portion of the image included in said part of the image;
- determining (105) an orientation of the marking area (ZM), said determination comprising a second processing;
- detecting (106) the characters comprised in the marking area (ZM), said detection comprising a third processing applied to a new image of the marking area (ZM), the new image being obtained on the basis of the portion of the image corresponding to the marking area (ZM) through a calculation carried out according to the orientation determined in the previous step;
- classifying (107, 108) each detected character in the new image of the marking area (ZM);
- ordering (109) the detected and classified characters in the new image of the marking area (ZM), according to a reading direction of the characters defined on the basis of the orientation of the marking area.

2. The method (100) according to claim 1, further comprising, after the step (106) of detecting the characters, a complementary step of adjusting the orientation of the detected character lines, and a new step of detecting the characters after the complementary step of adjusting the orientation of the detected character lines.

3. The method (100) according to one of claims 1 or 2, wherein the camera comprises a matrix sensor, or a linear sensor.

4. The method (100) according to one of claims 1 to 3, comprising a step (102) of defining at least two processing windows (F1, F2) within a preselected part of the image, each window partially covering at least one other window of the at least two windows.

5. The method (100) according to claim 4, wherein the first processing is applied within each window of the at least two windows, the detection step (103) further comprising calculating a detection score for each marking area (ZM) detected within each window of the at least two windows, and a sub-step (104) of selecting the marking area (ZM) on the basis of the detection score of the marking area.

6. The method (100) according to one of claims 1 to 3, wherein the part of the image covers the entirety of the image acquired in the acquisition step.

7. The method according to one of the preceding claims, wherein the classification (107, 108) of each character detected in the step (106) of detecting the characters comprises a fourth processing (107) for classifying the letters, and a fifth processing (108) for classifying the digits.

8. The method (100) according to one of the preceding claims, wherein the first processing of the step (103) of detecting the marking area comprises implementing a first neural network, the first neural network being preferably a group of neural networks, the group comprising a FASTER-RCNN type neural network and a Retinanet-Resnet50 type neural network, said FASTER-RCNN type neural network being associated with an INCEPTIONV2 module.

9. The method (100) according to one of the preceding claims, wherein the second processing of the step (105) of determining an orientation of the marking area (ZM) comprises implementing a second neural network, the second neural network preferably being of the VGG16 type.

10. The method (100) according to claim 9, as it depends on claim 2, wherein the complementary orientation adjustment step comprises implementing the second neural network, the second neural network preferably being of the VGG16 type.

11. The method (100) according to one of the preceding claims, wherein the third processing of the step (106) of detecting the characters comprised in the marking area (ZM) comprises implementing a third neural network, the third neural network preferably being a group of neural networks, the group comprising a FASTER-RCNN type neural network and a Retinanet-Resnet50 type neural network, said FASTER-RCNN type neural network being associated with an INCEPTIONV2 module.

12. The method (100) according to claim 11, as it depends on claim 2, wherein the new step of detecting the characters comprises implementing the third neural network, the third neural network preferably being a group of neural networks, the group comprising a FASTER-RCNN type neural network and a Retinanet-Resnet50 type neural network, said FASTER-RCNN type neural network being associated with an INCEPTIONV2 module.

13. The method (100) according to claim 7 or according to one of claims 8 to 12, as it depends on claim 7, wherein the fourth letter classification processing (107) comprises implementing a fourth neural network, the fourth neural network preferably being of the LeNet type.

14. The method (100) according to claim 7 or according to one of claims 8 to 13, as it depends on claim 7, wherein the fifth digit classification processing (108) comprises implementing a fifth neural network, the fifth neural network preferably being of the LeNet type.
